# EUROPEAN PATENT SPECIFICATION

(11) **EP 3 876 318 B1**
(45) Date of publication and mention of the grant of the patent: **02.07.2025**
(21) Application number: 19900606.5
(22) Date of filing: 17.12.2019
(51) Int. Cl.: H01M 4/62, H01M 4/04, H01M 4/02

(54) **SLURRY COMPOSITION FOR ELECTRODE OF SECONDARY BATTERY, ELECTRODE OF SECONDARY BATTERY, AND SECONDARY BATTERY**
SCHLAMMZUSAMMENSETZUNG FÜR ELEKTRODE EINER SEKUNDÄRBATTERIE, ELEKTRODE FÜR SEKUNDÄRBATTERIE UND SEKUNDÄRBATTERIE
COMPOSITION DE SUSPENSION ÉPAISSE D'ÉLECTRODE DESTINÉE À UNE BATTERIE SECONDAIRE, ÉLECTRODE DESTINÉE À UNE BATTERIE SECONDAIRE ET BATTERIE SECONDAIRE

(30) Priority: 17.12.2018 KR 20180163341; 13.12.2019 KR 20190167209
(43) Date of publication of application: 08.09.2021
(73) Proprietor: LG Chem, Ltd., Seoul 07336, (KR)
(72) Inventor: CHOI, Cheolhoon, Daejeon 34122 (KR); RYU, Dong Jo, Daejeon 34122 (KR); HAN, Seon Hee, Daejeon 34122 (KR); HAN, Jung Sup, Daejeon 34122 (KR); SON, Jeong Man, Daejeon 34122 (KR); KANG, Min Ah, Daejeon 34122 (KR)
(74) Representative: Goddar, Heinz J.
(86) International application number: PCT/KR2019/017907
(87) International publication number: WO 2020/130586

(56) References cited:
- KR-A- 20110 027 403
- KR-A- 20130 113 965
- KR-A- 20150 028 663
- KR-A- 20180 075 308
- KR-A- 20180 098 330

## Description

### BACKGROUND OF THE INVENTION

### (a) Field of the Invention

The present disclosure relates to a slurry composition for an electrode of a secondary battery, an electrode of a secondary battery prepared using the same, and a secondary battery, and more specifically, to a slurry composition for an electrode of a secondary battery capable of realizing excellent electrode adhesion in high energy electrode, an electrode of a secondary battery prepared using the same, and a secondary battery.

### (b) Description of the Related Art

A secondary battery is a battery that can be repeatedly used through charge in which chemical energy is converted into electric energy, and the reverse reaction discharge.

In general, a secondary battery consists of a cathode, an anode, an electrolyte, and a separator. The electrode may be prepared by mixing a cathode or an anode, each electrode active material, a conductive agent, a binder, a dispersant, a thickener, and the like to prepare an electrode slurry, and applying the electrode slurry on an electrode current collector such as a copper foil, and then, drying and rolling.

In the case of conventional anode slurry compositions, carboxymethyl cellulose was mainly used as a dispersant and a thickener (viscosity control agent), so as to control the viscosity and dispersibility.

However, since carboxymethyl cellulose is brittle, in case used in a high energy electrode having high active material content, electrode adhesion may be deteriorated, and during electrode slitting, delamination of an electrode may be caused.

Meanwhile, currently, lithium secondary batteries are mainly used as secondary batteries, but since lithium reserves are limited, development for novel active materials of secondary batteries capable of replacing lithium secondary batteries are being attempted, and specifically, development of secondary batteries using sodium or manganese are being progressed.

However, in case electrode materials used for the existing lithium secondary batteries are applied to such sodium or manganese-based secondary batteries, battery capacity or electrode properties may be deteriorated.

Thus, there is a demand for the development of electrode materials that can not only secure excellent stability during the preparation of electrodes having high active material content, but also reduce generation of defects such as electrode slitting, and realize excellent properties even when applied for novel materials such as sodium or manganese.

KR 10-2018-0075308 A discloses an anode for a secondary battery, and a lithium secondary battery comprising the anode for a secondary battery, the anode comprising: a current collector; and an electrode active material layer formed on the current collector, wherein the electrode active material layer comprises: a binder comprising a hydrophobically modified alkali-swellable emulsion; and a conductive material.

### SUMMARY OF THE INVENTION

### [Technical Problem]

It is an object of the present disclosure to provide a slurry composition for an electrode of a secondary battery capable of realizing excellent electrode adhesion in high energy electrodes, and realizing excellent properties even when applied for secondary batteries using sodium or manganese as well as lithium, an electrode of a secondary battery, and a secondary battery.

### [Technical Solution]

According to one aspect of the present disclosure, there is provided a slurry composition for an electrode of a secondary battery comprising: a hydrophobically modified alkali-swellable emulsion(HASE); poly (meth)acrylic acid; and a conductive agent.

The the hydrophobically modified alkali-swellable emulsion may be an acrylate-based copolymer emulsion comprising : a1) first repeat units derived from (meth)acrylic acid monomers; a2) second repeat units derived from alkyl (meth)acrylate-based monomers, in which the carbon number of the alkyl group is 1 to 5; and a3) third repeat units derived from (meth)acrylate-based monomers comprising an alkyl group having a carbon number of 6 to 30 as a hydrophobic pendant.

And, in the hydrophobically modified alkali-swellable emulsion, the third repeat units may comprise an alkyl group having a carbon number of 6 to 30 as a hydrophobic pendant at the end; and the hydrophobic pendant may be directly linked with the (meth)acrylate group of the third repeat unit; or the hydrophobic pendant may be linked with the (meth)acrylate group of the third repeat unit by a linker including i) C1-10 alkylene, ii) C6-20 arylene, iii) ester of the alkylene and the arylene, or iv) ether of the alkylene and the arylene.

Among them, it may be most preferable that the third repeat units are repeat units derived from alkyl (meth)acrylate-based monomers, in which the carbon number of the alkyl group is 7 to 20.

And, the hydrophobically modified alkali-swellable emulsion may comprise, based on the total weight of the acrylate-based copolymer emulsion, i) about 5 to about 75 wt% of the first repeat units; ii) about 20 to about 75 wt% of the second repeat units; and iii) about 1 to about 20 wt% of the third repeat units.

According to one embodiment of the present disclosure, the hydrophobically modified alkali-swellable emulsion may be included in the amount of about 0.1 to about 10 parts by weight, preferably about 0.5 to about 5 parts by weight, or about 1 to about 4 parts by weight, based on 100 parts by weight of electrode active material.

And, the poly(meth)acrylic acid may be included in the amount of about 0.1 to about 10 parts by weight, preferably about 0.1 to about 5 parts by weight, or about 0.3 to about 2 parts by weight, based on 100 parts by weight of electrode active material.

And, apart from the above rate, the poly(meth)acrylic acid may be included in the amount of about 10 to about 100 parts by weight, preferably about 30 to about 70 parts by weight, or about 40 to about 50 parts by weight, based on 100 parts by weight of the hydrophobically modified alkali-swellable emulsion.

According to another embodiment of the present disclosure, the slurry composition for an electrode of a secondary battery may comprise, based on the total weight 100 wt% of the solid content of the composition, about 80 to about 99.5 wt% of electrode active material; about 0.1 to about 10 wt% of a hydrophobically modified alkali-swellable emulsion(HASE); about 0.1 to about 10 wt% of poly(meth)acrylic acid; and about 0.1 to about 10 wt% of a conductive agent.

Meanwhile, according to another aspect of the present disclosure, there is provided an electrode of a secondary battery comprising: a current collector; and an electrode active material layer formed on at least one side of the current collector, wherein the electrode active material layer comprises the cured product of the above-explained slurry composition for an electrode of a secondary battery.

And, according to yet another aspect of the present disclosure, there is provided a secondary battery comprising the electrode of a secondary battery.

As used herein, terms "a first", "a second" and the like are used to explain various constructional elements, and they are used only to distinguish one constructional element from other constructional elements.

And, the terms used herein are only to explain specific embodiments, and are not intended to limit the present disclosure.

A singular expression includes a plural expression thereof, unless it is expressly stated or obvious from the context that such is not intended.

As used herein, the terms "comprise" or "have", etc. are intended to designate the existence of practiced characteristic, number, step, constructional element or combinations thereof, and they are not intended to preclude the possibility of existence or addition of one or more other characteristics, numbers, steps, constructional elements or combinations thereof.

And, in case it is stated that each constructional element is formed "on" or "above" each construction element, it means that each constructional element is formed directly on each constructional element, or that other constructional elements may be additionally formed between the layers or on the object or substrate.

Although various modifications can be made to the present disclosure and the present disclosure may have various forms, specific examples will be illustrated and explained in detail below. However, it should be understood that these are not intended to limit the present disclosure to specific disclosure, and that the present disclosure includes all the modifications, equivalents or replacements thereof without departing from the spirit and technical scope of the present disclosure.

Hereinafter, the present disclosure will be explained in detail.

First, a slurry composition for an electrode according to the present disclosure will be explained.

According to one aspect of the present disclosure, there is provided a slurry composition for an electrode of a secondary battery comprising: a hydrophobically modified alkali-swellable emulsion(HASE); poly (meth)acrylic acid; and a conductive agent.

The inventors of the present disclosure discovered that in case a hydrophobically modified alkali-swellable emulsion(HASE) and poly(meth)acrylic acid are used together instead of a dispersant, thickener, and binder commonly used in the existing electrode slurry composition, despite high active material content in the slurry composition, stability of the slurry composition may be improved, and excellent binding strength may be realized such that separation between electrode active materials or between electrode active material and a current collector may be prevented, and completed the present disclosure.

The slurry composition for an electrode according to one aspect of the present disclosure may be a slurry composition for an anode or a slurry composition for a cathode, and if it is an anode slurry composition, it may comprise anode active material, and if it is a cathode slurry composition, it may comprise cathode active material.

### Electrode active material

As the anode active material, materials capable of occluding and releasing lithium, sodium and/or manganese may be used. For example, as the anode active material, for example, carbon and graphite materials such as natural graphite, artificial graphite, carbon fiber, non-graphitizable carbon, and the like; elements that can be alloyed with lithium, sodium, and/or manganese, and the like, such as Ge, Sn, Pb, In, Zn, Ca, Sr, Ba, Ru, Rh, Ir, Pd, Pt, Ag, Au, Cd, Hg, Ga, Tl, C, N, Sb, Bi, O, S, Se, Te, Cl, and the like, or compounds including these elements; composites of metal or compounds thereof and carbon or graphite materials; nitride containing lithium, sodium, and/or manganese; titanium oxide; titanium oxide containing lithium, sodium, and/or manganese; silicon oxide(SiOx (0<x=<2)); silicon oxide containing lithium, sodium, and/or manganese(SiOx (0<x=<2)); tin oxide(SnOx (0<x=<2), SnSiO₃); tin oxide containing lithium, sodium, and/or manganese(SnOx (0<x=<2), SnSiO₃); complex oxide of lithium, sodium, and/or manganese and other transition metal and the like may be mentioned, but it is not limited thereto. Among them, carbonaceous active material, silicon-based active material, tin-based active material, or silicon-carbon based active material is more preferable, and they may be used alone or in combinations of two or more.

As the cathode active material, materials capable of occluding and releasing lithium, sodium, and/or manganese ions may be used. Specifically, when lithium, sodium, and/or manganese are referred to as M, layered compound such as M cobalt oxide(MCoO₂), M nickel oxide(MNiO₂), and the like, unsubstituted or substituted with one or more transition metals; M manganese oxide such as M₁₊ₓMn₂₋ₓO₄ (wherein, x is 0 to 0.33), MMnO₃, MMn₂O₃, MMnO₂, and the like; M copper oxide(M₂CuO₂); vanadium oxide such as MV₃O₈, MFe₃O₄, V₂O₅, Cu₂V₂O_{y}, and the like; M iron phosphate represented by the Chemical Formula M₁₊ₐFe₁₋ₓM'ₓPO_{4-b}A_{b} (wherein, M' is one or more selected from the group consisting of Mn, Ni, Co, Cu, Sc, Ti, Cr, V and Zn, A is one or more selected from the group consisting of S, Se, F, Cl and I, -0.5<a<0.5, 0≤x<0.5, 0≤b≤0.1); Ni site M nickel oxide represented by the Chemical Formula MNi₁₋ₓM'ₓO₂ (wherein, M' = Co, Mn, Al, Cu, Fe, M'g, B or Ga, and x = 0.01 to 0.3); M manganese complex oxide represented by the Chemical Formula MMn₂₋ₓM'ₓO₂ (wherein, M' = Co, Ni, Fe, Cr, Zn or Ta, and x = 0.01 to 0.1), M₂Mn₃M'O₈ (wherein, M' = Fe, Co, Ni, Cu or Zn), or M manganese complex oxide of a spinel structure represented by MNiₓMn₂₋ₓO₄; M-nickel-manganese-cobalt oxide represented by the Chemical Formula M(NiₚCo_{q}Mnᵣ₁)O2 (wherein, 0 < p < 1, 0 < q < 1, 0 < r1 < 1, p+q+r1=1), or M-nickel-manganese cobalt oxide represented by M(Niₚ₁Co_{q1}Mnᵣ₂)O4 (wherein, 0 < p1 < 2, 0 < q1 < 2, 0 < r2 < 2, p1+q1+r2=2)), or M-nickel-cobalt-transition metal(M') oxide represented by M(Niₚ₂Co_{q2}Mnᵣ₃M'ₛ₂)O2 (wherein, M' is selected from the group consisting of Al, Fe, V, Cr, Ti, Ta, M'g and M'o, and p2, q2, r3 and s2 are atomic fractions of each elements, and 0 < p2 < 1, 0 < q2 < 1, 0 < r3 < 1, 0 < s2 < 1, p2+q2+r3+s2=1), and the like may be mentioned, but it is not limited thereto.

The electrode active material may be included in the content of about 80 to about 99.5 wt%, or about 95 to about 99.5 wt%, preferably about 96 to about 98 wt%, based on the total weight of the solid content of the slurry composition for an electrode of a secondary battery, so as to realize excellent capacity property of a battery.

### Hydrophobically modified alkali-swellable emulsion

The hydrophobically modified alkali-swellable emulsion(HASE), which is in the form of an emulsion of polymer or copolymer comprising amphipathic monomer residues comprising unsaturated bonds, may improve dispersibility of the electrode slurry composition, and control the viscosity, thereby improving slurry stability of the whole composition.

Specifically, the copolymer included in HASE (hereinafter, referred to as HASE copolymer) is in the form of copolymer prepared from monomers containing acid groups that can be charged with anions, monomers containing non-ionic groups, and associative monomers containing hydrophobic groups, and particularly, contains pendant type hydrophobic groups linked according to the backbone.

HASE copolymer exhibits different properties according to pH change in the composition, due to the above molecular structure.

Specifically, if the pH of the whole composition including HASE copolymer is low, all the acid groups existing in the HASE copolymer molecule may exist in the form of Lewis acids, and in this form, attractive force or repulsive force according to charge is small. Thus, in the HASE copolymer, the polymer chains may be well-packed.

However, to the contrary, if the pH of the whole composition including HASE copolymer increases, hydrogen may leave from the acid groups existing in the molecule, and the acid groups exist in the form of Lewis base, namely, in negatively charged state, and thus, Coulob's force increases. In this case, HASE copolymer exhibits space filling, or volume exclusion wherein polymer chains unfold and expand by Coulob's force.

Particularly, HASE copolymer exhibits specific behavior in the polymer change mechanism according to pH change, due to the existence of pendant type hydrophobic groups.

The hydrophobic groups existing in the polymer chains of the HASE copolymer are spaced apart from the backbone of the copolymer, namely copolymer main chain, through various kinds of linkers (linking groups), and due to such a structural characteristic, in the above explained space filling or volume exclusion, hydrophobic interactions between pendant type hydrophobic groups, or with exogenous hydrophobic components included in the whole composition may be generated, and intermolecular and/or intramolecular hydrophobic association may be generated.

Due to the above explained principle, the hydrophobically modified alkali-swellable emulsion(HASE) may improve dispersibility of an electrode slurry composition more effectively, and control the viscosity of the whole composition, thereby significantly improving slurry stability of the whole composition.

The hydrophobically modified alkali-swellable emulsion may be an acrylate-based copolymer emulsion comprising: a1) first repeat units derived from (meth)acrylic acid monomers; a2) second repeat units derived from alkyl (meth)acrylate-based monomers, in which the carbon number of the alkyl group is 1 to 5; and a3) third repeat units derived from (meth)acrylate-based monomers comprising an alkyl group having a carbon number of 6 to 30 as a hydrophobic pendant.

And, in the hydrophobically modified alkali-swellable emulsion, the third repeat units may comprise an alkyl group having a carbon number of 6 to 30 as a hydrophobic pendant at the end, wherein the hydrophobic pendant may be directly linked with the (meth)acrylate group of the third repeat unit; or the hydrophobic pendant may be linked with the (meth)acrylate group of the third repeat unit by a linker including i) C1-10 alkylene, ii) C6-20 arylene, iii) ester of the alkylene and the arylene, or iv) ether of the alkylene and the arylene.

Wherein, the ester of alkylene and arylene may have a form wherein an ester(-COO-) group is linked only to the end of C1-10 alkylene or C6-20 arylene, or a polyester form wherein small units of alkylene and/or arylene, for example, C1-3 alkylene and/or C6 arylene groups and ester groups are repeatedly linked.

Wherein, the ether of alkylene and arylene may have form wherein oxide bond(-O-) is linked only to the end of C1-10 alkylene or C6-20 arylene, or a polyether, namely polyalkyleneoxide form wherein small units of alkylene and/or arylene, for example C1-3 alkylene and/or C6 arylene groups and oxide groups are repeatedly linked.

Among them, it is most preferable in terms of the above-explained interactions with hydrophobic groups that the third repeat units are derived from alkyl (meth)acrylate-based monomers, in which the carbon number of the alkyl group is 7 to 20.

And, the hydrophobically modified alkali-swellable emulsion may comprise, based on the total weight of the acrylate-based copolymer emulsion, i) about 5 to about 75 wt% of the first repeat units; ii) about 20 to about 75 wt% of the second repeat units; and iii) about 1 to about 20 wt% of the third repeat units.

And, in case a slurry composition for an electrode, and an electrode of a battery are prepared using the above explained hydrophobically modified alkali-swellable emulsion, compared to the prior art, high adhesion may be obtained, and delamination of an electrode in the post process such as electrode slitting may be effectively prevented.

According to one embodiment of the present disclosure, the hydrophobically modified alkali-swellable emulsion may be included in the amount of about 0.1 to about 10 parts by weight, preferably about 0.5 to about 5 parts by weight, or about 1 to about 4 parts by weight, based on 100 parts by weight of the electrode active material.

If the content of the hydrophobically modified alkali-swellable emulsion does not fall within the above range, phase stability of the electrode slurry composition may be deteriorated, and adhesion of the prepared electrode may be deteriorated, and thus, the properties of a battery such as cycle life characteristics may be also deteriorated.

And, in the above point of view, it is preferable that the slurry composition for an electrode of a secondary battery according to one embodiment of the present disclosure has a pH value of about 6 to about 8, or about 6.5 to about 7.5

### Poly (meth)acrylic acid

Poly(meth)acrylic acid is polymer or copolymer comprising one or more kinds of repeat units derived from acrylic acid and methacrylic acid, and since it is highly hydrophilic, it may improve phase stability of a slurry composition for an electrode, and improve adhesion property with a current collector.

According to one embodiment, it may be preferable that poly(meth)acrylic acid having a weight average molecular weight of about 350,000 to about 550,000 is used.

And, the poly(meth)acrylic acid may be included in the amount of about 0.1 to about 10 parts by weight, preferably about 0.1 to about 5 parts by weight, or about 0.3 to about 2 parts by weight, based on 100 parts by weight of the electrode active material.

And, apart from the above rate, the poly(meth)acrylic acid may be included in the amount of about 0.1 to about 5 parts by weight, preferably about 0.5 to about 2 parts by weight, based on 100 parts by weight of the hydrophobically modified alkali-swellable emulsion.

If the relative content of poly(meth)acrylic acid is too small, phase stability of the composition may be deteriorated, and adhesion with a current collector may be deteriorated, and if the relative content of poly(meth)acrylic acid is too large, electrolyte swelling may be significantly generated, and thus, gas generation according to the use of a battery may increase, and degradation of battery performance may be accelerated.

The electrode slurry compositions used for the preparation of the existing secondary batteries generally comprise a separate binder component, so as to secure adhesion of the electrode. In many cases, the binder includes, for example, vinylidenefluoride-hexafluoropropylene copolymer(PVDF-co-HEP), polyvinylidenefluoride, chlorotrifluoroethylene(CTFE), polyacrylonitrile, polymethylmethacrylate, polyvinylalcohol, carboxymethylcellulose(CMC), starch, hydroxypropylcellulose, regenerated cellulose, polyvinylidene, tetrafluoroethylene, polyethylene, polypropylene, polyacrylic acid, ethylene-propylene-diene monomer(EPDM), sulfonated EPDM, styrene-butadiene rubber(SBR), fluorinated rubber, polyacrylic acid, and mixtures thereof.

However, according to the present disclosure, the above listed separate binder components are not included, besides the above explained HASE and poly(meth)acrylic acid.

Particularly, in the past, among the above listed binder components, carboxymethylcellulose, or acrylate-based latex emulsion, or butadiene-based latex emulsion were often used as the binder components, but in this case, due to brittleness of carboxymethylcellulose, or low adhesion of the latex emulsion, electrode adhesion may be deteriorated in high energy electrodes, and during electrode slitting, delamination of an electrode may be generated.

However, the electrode slurry composition of the present disclosure, due to the above explained characteristic composition, has very excellent slurry stability, excellent electrode adhesion in high energy electrode, and can effectively prevent delamination of an electrode during electrode slitting. And, since the electrode slurry composition of the present disclosure is monolithic liquid composition type without including a separate binder, the composition is simple, and thus, during the preparation of a battery, it is favorable in terms of processability or economical feasibility, compared to the past.

### Conductive agent

And, the electrode slurry composition according to one aspect of the present disclosure comprises a conductive agent.

The conductive agent is not specifically limited as long as it is conductive without inducing chemical change in the battery, and for example, graphite such as natural graphite or artificial graphite, and the like; carbon black such as carbon black, acetylene black, ketjen black, channel black, furnace black, lamp black, thermal black, and the like; conductive fiber such as carbon fiber or metal fiber, and the like; metal powder such as fluorinated carbon, aluminum, or nickel powder, and the like; conductive whisker such as zinc oxide, potassium titanate, and the like; conductive metal oxide such as titanium oxide, and the like; conductive material such as polyphenylene derivatives, and the like may be used.

According to another embodiment of the present disclosure, the slurry composition for an electrode may comprise, based on the total weight 100 wt% of the solid content of the slurry composition, about 80 to about 99.5 wt% of electrode active material; about 0.1 to about 10 wt% of a hydrophobically modified alkali-swellable emulsion(HASE); about 0.1 to about 10 wt% of poly(meth)acrylic acid; and about 0.1 to about 10 wt% of a conductive agent.

When the slurry composition for an electrode of the present disclosure has the above relative contents, even if it has high active material content compared to the existing electrode slurry composition, it has excellent phase stability and low viscosity, and thus, has excellent slurry stability. And, an electrode prepared using the electrode slurry composition has excellent electrode adhesion, and thus, generates less delamination of an electrode in the post process such as electrode slitting, and may realize excellent battery properties.

### Other additives

Meanwhile, in the electrode slurry composition used for the preparation of the existing secondary battery, electrode active material, a conductive agent, a binder, and the like are mixed, and then, a separate viscosity control agent or filler is frequently included so as to control the viscosity.

Particularly, as a thickener (or viscosity control agent) component, carboxyalkylcellulose-based viscosity control agents, particularly carboxymethylcellulose is frequently used, but since carboxymethylcellulose is brittle, when used in a high energy electrode having high active material content, it may decrease electrode adhesion, and cause delamination of the electrode during electrode slitting, thus degrading battery performances.

Thus, the slurry composition for an electrode of a secondary battery according to one embodiment of the present disclosure does not comprise a carboxyalkylcellulose-based viscosity control agent as described above.

Since a carboxyalkylcellulose-based viscosity control agent is not used, the above explained problems may be fundamentally prevented, and even if such carboxyalkylcellulose-based viscosity control agent is not used, due to the use of HASE and poly(meth)acrylic acid, the electrode slurry composition may have very excellent stability and appropriate viscosity range.

Meanwhile, the carboxyalkylcellulose-based compound used as a viscosity control agent is distinguished from carboxymethylcellulose used as a separate binder component as explained above.

The slurry composition for an electrode of a secondary battery according to one embodiment of the present disclosure may consist of monolithic liquid composition type, comprising the above explained components.

### Electrode

Meanwhile, according to another aspect of the present disclosure, there is provided an electrode of a secondary battery comprising: a current collector; and an electrode active material layer formed on at least one side of the current collector, wherein the electrode active material layer comprises the cured product of the slurry composition for an electrode of a secondary battery as explained above.

The current collector is not specifically limited as long as it is conductive without inducing chemical change in a battery, and for example, copper, stainless steel, aluminum, nickel, titanium, baked carbon, copper or stainless steel surface-treated with carbon, nickel, titanium, silver, and the like, aluminum-cadmium alloy, and the like may be used. And, fine unevenness may be formed on the surface to increase binding strength of electrode active material, and it may be used in various forms such as a film, a sheet, a foil, a net, a porous body, a foam body, non-woven fabric, and the like.

The electrode may further comprise filler. The filler is selectively used as a component for inhibiting expansion of an electrode, is not specifically limited as long as it is fibrous material without inducing chemical change in the battery, and for example, olefin polymer such as polyethylene, polypropylene, and the like; fibrous material such as glass fiber, carbon fiber, and the like may be used.

Such an electrode of a secondary battery may be prepared by a common method well known in the art, and for example, it may be prepared by applying the above explained electrode slurry composition on a current collector, drying and rolling.

The current collector may be generally formed with a thickness of about 3 to about 500 *µ*m.

### Battery

And, according to another aspect of the present disclosure, there is provided a secondary battery comprising the electrode. Specifically, the secondary battery may comprise a cathode, an anode, a separator for separating the cathode and anode, and an electrolyte.

The separator is not specifically limited as long as it is commonly used in lithium batteries, and separates a cathode and an anode and provides lithium ion channel. Namely, separators having low resistance to electrolyte ion transport and excellent electrolyte wetting capacity may be used. For example, it may be selected from glass fiber, polyester, Teflon, polyethylene, polypropylene, polytetrafluoroethylene(PTFE) or combinations thereof, and it may be in the form of non-woven or woven fabric. For example, in lithium ion batteries, polyolefin-based polymer separators such as polyethylene, polypropylene, and the like are mostly used, and in order to secure heat resistance or mechanical strength, coated separators including ceramic components or polymer materials may be also used, and it may be selectively used in a monolayer or multilayer.

According to circumstances, in order to increase stability of a battery, gel polymer electrolyte may be coated on the separator. Representative examples of the gel polymer may include polyethyleneoxide, polyvinylidenefluoride, polyacrylonitrile, and the like.

However, in case solid electrolyte is use instead of the non-aqueous electrolyte, the solid electrolyte may also serve as a separator.

The non-aqueous electrolyte may be liquid electrolyte comprising non-aqueous organic solvents and lithium salts. The non-aqueous organic solvent functions as a medium where ions participating in the electrochemical reactions of a battery can move.

As the non-aqueous electrolyte, a non-aqueous electrolyte solution, organic solid electrolyte, inorganic solid electrolyte, and the like are used.

As the non-aqueous electrolyte solution, for example, aprotic organic solvent such as N-methyl-2-pyrrolidinone, propylene carbonate, ethylene carbonate, butylenes carbonate, dimethyl carbonate, diethyl carbonate, ethylmethyl carbonate, gamma-butyrolactone, 1,2-dimethoxy ethane, 1,2-diethoxy ethane, tetrahydrofuran, 2-methyl tetrahydrofuran,dimethyl sulfoxide, 1,3-dioxolane, acetonitrile, nitromethane, methyl formate, methyl acetate, phosphate triester, trimethoxy methane, dioxolane derivatives, sulfolane, methyl sulfolane, 1,3-dimethyl-2-imidazolidinone, propylene carbonate derivatives, tetrahydrofuran derivatives, ether, methyl propionate, ethyl propionate, and the like may be used.

As the organic solid electrolyte, for example, polyethylene derivativces, polyethylene oxide derivatives, polypropylene oxide derivatives, phosphoric acid ester polymer, polylysine, polyester sulfide, polyvinyl alcohol, polyvinylidene fluoride, ionic dissociable groups, and the like may be used.

As the inorganic solid electrolyte, for example, nitride, halogenide, sulfate, and the like of Li, such as Li₃N, LiI, Li₅NI₂, Li₃N-LiI-LiOH, LiSiO₄, LiSiO₄-LiI-LiOH, Li₂SiS₃, Li₄SiO₄, Li₄SiO₄-LiI-LiOH, Li₃PO₄-Li₂S-SiS₂, and the like may be used.

The lithium salt is material that is easy to dissolve in the non-aqueous electrolyte, and for example, LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, CF₃SO₃Li, LiSCN, LiC(CF₃SO₂)₃, (CF₃SO₂)₂NLi, chloroborane lithium, low aliphatic carbonic acid lithium, lithium tetraphenylborate, and the like may be used.

In addition, to the electrolyte solution, for the purpose of improving the charge and discharge characteristics, flame retardancy, and the like, for example, pyridine, triethyl phosphite, triethanolamine, cyclic ether, ethylene diamine, n-glyme, hexaphosphate triamide, nitro benzene derivatives, sulfur, quinone imine dyes, N-substituted oxazolidinones, N, N-substituted imidazolidine, ethylene glycol dialkyl ether, ammonium salts, pyrrole, 2-methoxy ethanol, aluminum trichloride and the like may be added. In some cases, in order to impart nonflammability, a halogen-containing solvent such as carbon tetrachloride or ethylene trifluoride may be further included, and in order to improve high temperature storage characteristics, a carbon dioxide gas may be further included, and fluoro-ethylene carbonate(FEC), propene sultone(PRS), and fluoro-propylene carbonate(FPC), and the like may be further included.

The secondary battery according to the present disclosure may be not only used in a battery cell used as a power source for a small device, but also used as a unit battery in a medium-large battery module including a plurality of battery cells.

### [Advantageous Effects]

The electrode slurry composition of the present disclosure has excellent slurry stability, and when preparing a battery, may realize excellent electrode adhesion in high energy electrode, and thus, may effectively inhibit delamination of an electrode in post processes such as electrode slitting.

### DETAILED DESCRIPTION OF THE EMBODIMENTS

Hereinafter, the actions and effects of the present disclosure will be explained in more detail with reference to specific examples. However, these examples are presented only as the illustrations of the present disclosure, and the scope of the right of the invention is not determined thereby,

### <Example>

Reagents used are as follows.

### Preparation of anode slurry

As anode active material, SiO and artificial graphite were mixed at a weight ratio of 3:7 and used.

As hydrophobically modified alkali-swellable emulsion(HASE), ACRYSOL TT-935 (ROHM and HAAS) was used.

As polyacrylic acid, one having weight average molecular weight of about 450,000 and polymerization degree of about 5,000 was used.

As a conductive agent, Super C65, a kind of carbon black, was used.

### Example 1

0.7 g of HASE and 0.3 g of polyacrylic acid were physically mixed, and about 50 g of deionized water was added and thoroughly mixed. Thereafter, 1 g of a conductive agent was introduced and thoroughly mixed. And, 98 g of anode active material and about 50 g of deionized water were additionally added, and thoroughly mixed to prepare an anode slurry composition.

The pH of the prepared anode slurry composition was about 6.9.

### Examples 2 to 5

The anode slurry compositions were prepared by the same method as Example 1, except that the content of each material was varied.

The compositions of the Examples were respectively summarized in the following Table 1.

**[Table 1]**

| | Anode active material | HASE (g) | Polyacrylic acid (g) | Conductive agent (g) | pH |
|---|---|---|---|---|---|
| Example 1 | 98 | 0.7 | 0.3 | 1 | 6.9 |
| Example 2 | 97 | 1.4 | 0.6 | 1 | 6.8 |
| Example 3 | 96 | 2.1 | 0.9 | 1 | 6.7 |
| Example 4 | 95 | 2.8 | 1.2 | 1 | 6.6 |
| Example 5 | 94 | 3.5 | 1.5 | 1 | 6.5 |

### Comparative Example 1

First, 1 g of solid powder of carboxymethylcellulose(hereinafter, CMC) having weight average molecular weight of about 1,200,000 was added to 50 g of a solvent deionized water and stirred through a HomoDisperser to prepare a solution, and 1 g of a conductive agent was added thereto, thus preparing a dispersion in which the above components are dispersed.

To the dispersion, 97 g of anode active material was mixed to prepare a slurry, and 50 g of deionized water was added to the slurry as diluent to control the viscosity of the slurry to about 5,000cP, and then, 1 g of styrene-butadiene rubber(SBR) (L78; product of LG Chem.) was added as a binder to prepare an anode slurry composition.

### Comparative Examples 2, 3

The anode slurry compositions were prepared by the same method as Comparative Example 1, except that the content of each material was varied.

### Comparative Example 4

First, 1 g of solid powder of carboxymethylcellulose(hereinafter, CMC) having weight average molecular weight of about 1,200,000 was added to 50 g of a solvent deionized water and stirred through a HomoDisperser to prepare a solution, and 3 g of styrene-butadiene rubber(SBR) (L78; product from LG Chem.) was added and stirred again to prepare a mixed solution.

To 50% of the mixed solution, 1 g of a conductive agent was added to prepare a dispersion in which the above components are dispersed.

97 g of anode active material was mixed with the dispersion to prepare a slurry, and to the slurry, the remaining 50% of the monolithic liquid composition type mixed solution and 50 g of deionized water as diluent were added to prepare an anode slurry composition of which viscosity was adjusted to about 5,000cP.

### Comparative Example 5

1 g of ACRYSOL TT-615 HASE (ROHM and HAAS) and 3 g of styrene-butadiene rubber(SBR) (L78; product from LG Chem.) as a binder were physically mixed, and about 50 g of deionized water was added and thoroughly mixed. Thereafter, 1 g of a conductive agent was added and thoroughly mixed. And, 95 g of anode active material and about 50 g of deionized water were additionally introduced therein and thoroughly mixed to prepare an anode slurry composition.

The compositions of the Comparative Examples were respectively summarized in the following Table 2.

**[Table 2]**

| | Anode active material (weight, g) | Thickener (kind/weight, g) | SBR (weight, g) | Conductive agent (weight, g) |
|---|---|---|---|---|
| Comparative Example 1 | 97 | CMC / 1 | 1 | 1 |
| Comparative Example 2 | 96 | CMC / 1 | 2 | 1 |
| Comparative Example 3 | 95 | CMC / 1 | 3 | 1 |
| Comparative Example 4 | 95 | CMC / 1 | 3 | 1 |
| Comparative Example 5 | 95 | TT-615 / 1 | 3 | 1 |

### Preparation of an anode

The above prepared anode slurry was applied on an anode current collector of a Cu thin film having a thickness of 10 *µ*m, dried at about 90 °C, and then, roll pressed, and dried at about 130 °C for about 8 hours, thus preparing an anode.

### Evaluation of adhesion

The above prepared anode was punched to an electrode having a width of 20 mm using a punching machine, and then, roll pressed, and vacuum dried at about 120 °C for about 12 hours.

Thereafter, on a glass to which double-sided tape is attached, the side of the anode, on which the anode slurry was applied, was attached, and pressed using a roller, and then, 180 degree peel strength was measured using Universal Test Machine (unit: gf/in; 1gf/in = 0.386 N/m).

### Measurement of electrode delamination amount

On the basis of anode loading value, theoretical electrode weight of the above prepared anode was calculated.

The above prepared anode was punched to an electrode having a width of 20 mm using a punching machine, and then, roll pressed, and vacuum dried at about 120 °C for about 12 hours.

Thereafter, the weight of each anode was measured, and a difference from the theoretical electrode weight was calculated, which was evaluated as electrode delamination amount (unit: g).

### Measurement of resistance

After preparing a coin half cell, using Solartron analytical EIS, resistance value was measured under conditions of frequency 300000~0.1Hz, Ac amplitude 10mA.

### Measurement of cycle life characteristic of a battery

Using the above prepared electrode and lithium metal, a coin type lithium secondary battery was manufactured.

For the manufactured secondary battery, charge/discharge test was conducted twice at a charge/discharge current density of 0.2 C, final charge voltage of 4.5 V, and final discharge voltage of 2.5 V. And then, charge/discharge test was conducted 48 times at a charge/discharge current density of 1 C, final charge voltage of 4.5 V, and final discharge voltage of 2.5 V. All the charges were conducted at constant current/constant voltage, and the final current of constant voltage charge was set as 0.05 C.

After completing the test of total 50 cycles, charge discharge efficiency of the first cycle (initial efficiency and 50 cycle capacity retention) was calculated. And, charge capacity of 50^{th} cycle was divided by charge capacity of 1^{st} cycle to calculate capacity retention.

Evaluation results were summarized in the following Table 3.

**[Table 3]**

| | Adhesion (N/m (gf/in)) | Delamination amount (g) | Electrode resistance (mili ohm) | Battery cycle life characteristic |
|---|---|---|---|---|
| Example 1 | 4.75 (12.3) | 1.7 | 1.5 | 75 |
| Example 2 | 11.20(29.0) | 1.0 | 2.2 | 88 |
| Example 3 | 15.17 (39.3) | 0.6 | 2.5 | 95 |
| Example 4 | 18.73 (48.5) | 0.5 | 2.9 | 98 |
| Example 5 | 24.21 (62.7) | 0.6 | 4.0 | 98 |
| Comparative Example 1 | 3.17 (8.2) | 9.7 | 4.7 | 63 |
| Comparative Example 2 | 6.06 (15.7) | 6.9 | 7.5 | 67 |
| Comparative Example 3 | 10.46 (27.1) | 3.8 | 8.8 | 68 |
| Comparative Example 4 | 9.77 (25.3) | 4.2 | 5.7 | 60 |
| Comparative Example 5 | 7.53 (19.5) | 31 | 10.8 | 55 |

Referring to Table 3, it can be confirmed that the electrode slurry compositions according to the Examples of the present disclosure have very excellent adhesion, and thus, very small electrode delamination amount, and simultaneously, have low electrode resistance.

Particularly, it can be confirmed that as the amount of hydrophobically modified alkali-swellable emulsion used increases, adhesion significantly increases, and the electrode delamination amount definitely decreases, and it is clearly confirmed that such an electrode delamination amount is minimum about 5% to maximum about 40%, compared to Comparative Examples, and electrode resistance is minimum about 15% to maximum about 60%, compared to Comparative Examples.

It is also confirmed that the electrode slurry compositions according to the Examples of the present disclosure have very excellent capacity retention, even in 50 cycles charge discharge test.

Thus, it is expected that the electrode slurry compositions according to the Examples of the present disclosure, when used in a secondary battery, can significantly improve battery performances.

## Claims

1. A slurry composition for an electrode of a secondary battery comprising
a hydrophobically modified alkali-swellable emulsion(HASE);
poly (meth)acrylic acid; and
a conductive agent.

2. The slurry composition for an electrode of a secondary battery according to claim 1, wherein the hydrophobically modified alkali-swellable emulsion is an acrylate-based copolymer emulsion comprising
a1) first repeat units derived from (meth)acrylic acid monomers;
a2) second repeat units derived from alkyl (meth)acrylate-based monomers, in which the carbon number of the alkyl group is 1 to 5; and
a3) third repeat units derived from (meth)acrylate-based monomers comprising an alkyl group having a carbon number of 6 to 30 as a hydrophobic pendant.

3. The slurry composition for an electrode of a secondary battery according to claim 2, wherein the third repeat unit comprises an alkyl group having a carbon number of 6 to 30 as a hydrophobic pendant at the end; and
the hydrophobic pendant is directly linked with the (meth)acrylate group of the third repeat unit; or
the hydrophobic pendant is linked with the (meth)acrylate group of the third repeat unit by a linker including i) C1-10 alkylene, ii) C6-20 arylene, iii) ester of the alkylene and the arylene, or iv) ether of the alkylene and the arylene.

4. The slurry composition for an electrode of a secondary battery according to claim 2, wherein the third repeat units are repeat units derived from alkyl (meth)acrylate-based monomers, in which the carbon number of the alkyl group is 7 to 20.

5. The slurry composition for an electrode of a secondary battery according to claim 2, wherein the hydrophobically modified alkali-swellable emulsion comprises, based on the total weight of the acrylate-based copolymer emulsion,
i) 5 to 75 wt% of the first repeat units;
ii) 20 to 75 wt% of the second repeat units; and
iii) 1 to 20 wt% of the third repeat units.

6. The slurry composition for an electrode of a secondary battery according to claim 1, wherein the hydrophobically modified alkali-swellable emulsion is included in the amount of 0.1 to 10 parts by weight, based on 100 parts by weight of electrode active material.

7. The slurry composition for an electrode of a secondary battery according to claim 1, wherein the poly(meth)acrylic acid is included in the amount of 0.1 to 10 parts by weight, based on 100 parts by weight of electrode active material.

8. The slurry composition for an electrode of a secondary battery according to claim 1, wherein the poly(meth)acrylic acid is included in the amount of 10 to 100 parts by weight, based on 100 parts by weight of the hydrophobically modified alkali-swellable emulsion.

9. The slurry composition for an electrode of a secondary battery according to claim 1, wherein carboxyakyl cellulose-based viscosity control agent is not included.

10. The slurry composition for an electrode of a secondary battery according to claim 1, wherein the slurry composition for an electrode of a secondary battery is a single liquid formulation.

11. The slurry composition for an electrode of a secondary battery according to claim 1, wherein the slurry composition for an electrode of a secondary battery comprises, based on the total weight 100 wt% of the solid content of the slurry composition,
80 to 99.5 wt% of electrode active material;
0.1 to 10 wt% of a hydrophobically modified alkali-swellable emulsion(HASE);
0.1 to 10 wt% of poly(meth)acrylic acid; and
0.1 to 10 wt% of a conductive agent.

12. An electrode of a secondary battery comprising
a current collector; and
an electrode active material layer formed on at least one side of the current collector,
wherein the electrode active material layer comprises the cured product of the slurry composition for an electrode of a secondary battery according to claim 1.

13. A secondary battery comprising the electrode of a secondary battery according to claim 12.

## Patentansprüche

1. Aufschlämmungszusammensetzung für eine Elektrode einer Sekundärbatterie, umfassend
eine hydrophob modifizierte alkaliquellbare Emulsion (HASE);
Poly(meth)acrylsäure; und
ein leitfähiges Mittel.

2. Aufschlämmungszusammensetzung für eine Elektrode einer Sekundärbatterie nach Anspruch 1, wobei die hydrophob modifizierte alkaliquellbare Emulsion eine Copolymeremulsion auf Acrylatbasis ist, umfassend
a1) erste Wiederholungseinheiten, die von (Meth)acrylsäuremonomeren abgeleitet sind;
a2) zweite Wiederholungseinheiten, die von Monomeren auf Alkyl(meth)acrylatbasis abgeleitet sind, wobei die Kohlenstoffzahl der Alkylgruppe 1 bis 5 beträgt; und
a3) dritte Wiederholungseinheiten, die von Monomeren auf (Meth)acrylatbasis abgeleitet sind, umfassend eine Alkylgruppe mit einer Kohlenstoffzahl von 6 bis 30 als hydrophobe Seitenkette.

3. Aufschlämmungszusammensetzung für eine Elektrode einer Sekundärbatterie nach Anspruch 2, wobei die dritte Wiederholungseinheit eine Alkylgruppe mit einer Kohlenstoffzahl von 6 bis 30 als hydrophobe Seitenkette am Ende umfasst; und
die hydrophobe Seitenkette direkt mit der (Meth)acrylatgruppe der dritten Wiederholungseinheit verknüpft ist; oder
die hydrophobe Seitenkette mit der (Meth)acrylatgruppe der dritten Wiederholungseinheit durch einen Linker verknüpft ist, der i) C1-10 -Alkylen, ii) C6-20 -Arylen, iii) Ester des Alkylens und des Arylens oder iv) Ether des Alkylens und des Arylens einschließt.

4. Aufschlämmungszusammensetzung für eine Elektrode einer Sekundärbatterie nach Anspruch 2, wobei die dritten Wiederholungseinheiten Wiederholungseinheiten sind, die von Monomeren auf Alkyl(meth)acrylatbasis abgeleitet sind, wobei die Kohlenstoffzahl der Alkylgruppe 7 bis 20 beträgt.

5. Aufschlämmungszusammensetzung für eine Elektrode einer Sekundärbatterie nach Anspruch 2, wobei die hydrophob modifizierte alkaliquellbare Emulsion, bezogen auf das Gesamtgewicht der Copolymeremulsion auf Acrylatbasis,
i) 5 bis 75 Gew.-% der ersten Wiederholungseinheiten;
ii) 20 bis 75 Gew.-% der zweiten Wiederholungseinheiten; und
iii) 1 bis 20 Gew.-% der dritten Wiederholungseinheiten
umfasst.

6. Aufschlämmungszusammensetzung für eine Elektrode einer Sekundärbatterie nach Anspruch 1, wobei die hydrophob modifizierte alkaliquellbare Emulsion in der Menge von 0,1 bis 10 Gewichtsteilen, bezogen auf 100 Gewichtsteile aktives Elektrodenmaterial, enthalten ist.

7. Aufschlämmungszusammensetzung für eine Elektrode einer Sekundärbatterie nach Anspruch 1, wobei die Poly(meth)acrylsäure in der Menge von 0,1 bis 10 Gewichtsteilen, bezogen auf 100 Gewichtsteile aktives Elektrodenmaterial, enthalten ist.

8. Aufschlämmungszusammensetzung für eine Elektrode einer Sekundärbatterie nach Anspruch 1, wobei die Poly(meth)acrylsäure in der Menge von 10 bis 100 Gewichtsteilen, bezogen auf 100 Gewichtsteile der hydrophob modifizierten alkaliquellbaren Emulsion, enthalten ist.

9. Aufschlämmungszusammensetzung für eine Elektrode einer Sekundärbatterie nach Anspruch 1, wobei kein Viskositätssteuermittel auf Carboxyalkylcellulosebasis enthalten ist.

10. Aufschlämmungszusammensetzung für eine Elektrode einer Sekundärbatterie nach Anspruch 1, wobei die Aufschlämmungszusammensetzung für eine Elektrode einer Sekundärbatterie eine einzelne flüssige Formulierung ist.

11. Aufschlämmungszusammensetzung für eine Elektrode einer Sekundärbatterie nach Anspruch 1, wobei die Aufschlämmungszusammensetzung für eine Elektrode einer Sekundärbatterie, bezogen auf das Gesamtgewicht von 100 Gew.-% des Feststoffgehalts der Aufschlämmungszusammensetzung,
80 bis 99,5 Gew.-% aktives Elektrodenmaterial;
0,1 bis 10 Gew.-% einer hydrophob modifizierten alkaliquellbaren Emulsion (HASE);
0,1 bis 10 Gew.-% Poly(meth)acrylsäure; und
0,1 bis 10 Gew.-% eines leitfähigen Mittels umfasst.

12. Elektrode einer Sekundärbatterie, umfassend
einen Stromabnehmer; und
eine aktive Elektrodenmaterialschicht, die auf mindestens einer Seite des Stromabnehmers gebildet ist,
wobei die aktive Elektrodenmaterialschicht das gehärtete Produkt der Aufschlämmungszusammensetzung für eine Elektrode einer Sekundärbatterie nach Anspruch 1 umfasst.

13. Sekundärbatterie, umfassend die Elektrode einer Sekundärbatterie nach Anspruch 12.

## Revendications

1. Composition de boue pour une électrode d'une batterie secondaire comprenant
une émulsion alcaline gonflable modifiée hydrophobiquement (HASE) ;
acide poly(méth)acrylique; et
un agent conducteur.

2. Composition de boue pour une électrode de batterie secondaire selon la revendication 1, dans laquelle l'émulsion alcaline gonflable modifiée hydrophobiquement est une émulsion de copolymère à base d'acrylate comprenant
a1) premières unités de répétition dérivées de monomères d'acide (méth)acrylique ;
a2) deuxièmes unités de répétition dérivées de monomères à base de (méth)acrylate d'alkyle, dans lesquels le nombre de carbones du groupe alkyle est compris entre 1 et 5; et
a3) des troisièmes unités de répétition dérivées de monomères à base de (méth)acrylate comprenant un groupe alkyle ayant un nombre de carbones compris entre 6 et 30 en tant que pendant hydrophobe.

3. Composition de suspension pour une électrode de batterie secondaire selon la revendication 2, dans laquelle la troisième unité de répétition comprend un groupe alkyle ayant un nombre de carbone de 6 à 30 en tant que pendentif hydrophobe à l'extrémité; et
le pendant hydrophobe est directement lié au groupe (méth)acrylate de la troisième unité de répétition; ou
le pendant hydrophobe est lié au groupe (méth)acrylate de la troisième unité de répétition par un liant comprenant i) un alkylène en C1-10, ii) un arylène en C6-20, iii) un ester de l'alkylène et de l'arylène, ou iv) un éther de l'alkylène et de l'arylène.

4. Composition de suspension pour électrode de batterie secondaire selon la revendication 2, dans laquelle les troisièmes unités de répétition sont des unités de répétition dérivées de monomères à base de (méth)acrylate d'alkyle, dans lesquels le nombre de carbone du groupe alkyle est compris entre 7 et 20.

5. Composition de boue pour une électrode de batterie secondaire selon la revendication 2, dans laquelle l'émulsion alcaline gonflable modifiée hydrophobiquement comprend, par rapport au poids total de l'émulsion de copolymère à base d'acrylate, une émulsion de copolymère à base d'acrylate,
i) 5 à 75 % en poids des premières unités répétées;
ii) 20 à 75 % en poids des deuxièmes unités de répétition; et
iii) 1 à 20 % en poids des troisièmes unités de répétition.

6. Composition de boue pour une électrode de batterie secondaire selon la revendication 1, dans laquelle l'émulsion alcaline gonflable modifiée hydrophobiquement est incluse à raison de 0,1 à 10 parties en poids, sur la base de 100 parties en poids de matière active d'électrode.

7. Composition de boue pour une électrode de batterie secondaire selon la revendication 1, dans laquelle l'acide poly(méth)acrylique est inclus dans une quantité de 0,1 à 10 parties en poids, sur la base de 100 parties en poids de matière active d'électrode.

8. Composition de boue pour une électrode de batterie secondaire selon la revendication 1, dans laquelle l'acide poly(méth)acrylique est inclus dans une quantité de 10 à 100 parties en poids, sur la base de 100 parties en poids de l'émulsion alcaline gonflable modifiée hydrophobiquement.

9. Composition de suspension pour une électrode d'une batterie secondaire selon la revendication 1, dans laquelle agent de contrôle de la viscosité à base de carboxyakylcellulose n'est pas inclus.

10. Composition de boue pour une électrode d'une batterie secondaire selon la revendication 1, dans laquelle la composition de boue pour une électrode d'une batterie secondaire est une formulation liquide unique.

11. Composition de boue pour une électrode de batterie secondaire selon la revendication 1, dans laquelle la composition de boue pour une électrode de batterie secondaire comprend, sur la base du poids total, 100 % en poids du contenu solide de la composition de boue,
80 à 99,5 % en poids de matière active de l'électrode ;
0,1 à 10 % en poids de une émulsion alcaline gonflable modifiée hydrophobiquement (HASE) ;
0,1 à 10 % en poids d'acide poly(méth)acrylique ; et
0,1 à 10 % en poids d'un agent conducteur.

12. Électrode d'une batterie secondaire comprenant
un collecteur de courant; et
une couche de matériau actif d'électrode formée sur au moins un côté du collecteur de courant,
la couche de matériau actif de l'électrode comprend le produit durci de la composition de boue pour une électrode d'une batterie secondaire selon la revendication 1.

13. Batterie secondaire comprenant l'électrode d'une batterie secondaire selon la revendication 12.
